# EUROPEAN PATENT APPLICATION

(11) **EP 1 199 286 A1**
(43) Date of publication of application: **24.04.2002**
(21) Application number: 00309166.7
(22) Date of filing: 18.10.2000
(51) Int. Cl.: C03B 37/027, C03C 13/04, C03B 37/012

(54) **Optical fibres and preforms incorporating volatile constituents and process for manufacturing the fibre**

(71) Applicant: THE UNIVERSITY OF SOUTHAMPTON, Southampton S017 1BJ (GB)
(72) Inventor: Brambilla, Gilberto, University of Southampton, Highfield, Southampton SO17 1BJ (GB); Pruneri, Valerio, University of Southampton, Highfield, Southampton SO17 1BJ (GB)
(74) Representative: Haines, Miles John

(57) **Abstract**

A method of fabricating an optical fibre incorporating a volatile constituent, comprising: (a) providing a preform comprising a cladding glass having an axial aperture and a core glass arranged in the axial aperture, wherein the working temperature of the core glass lies below the working temperature of the cladding glass; and (b) drawing the preform into an optical fibre at a drawing temperature that lies between the working temperatues of the core and cladding glasses and above the softening temperature of the cladding glass, wherein the core glass prior to drawing includes a dioxide or higher oxide compound of the volatile consitituent having a Gibbs free energy of disassociation into a monoxide compound of the volatile constituent that is negative at the drawing temperature, whereby the dioxide or higher oxide compound tends to disassociate into the monoxide compound during drawing. The volatile constituent may be P, Sn or Pb. With this method, the core material melts while the cladding glass remains solid but in a deformable state. Melting the core material, provides more freedom in the choice of combinations of core and cladding glasses. The starting material for the core may be a powder or a solid rod, i.e. the invention may be embodied as a powder-in-tube (PIT) or a rod-in-tube (RIT) method. The optical fibre produced by the method and the preform used in the method are also claimed and disclosed.

## Description

### BACKGROUND OF THE INVENTION

The invention relates to fabrication methods for making optical fibres incorporating volatile constituents, to optical fibre preforms used in such fabrication methods, to optical fibres made by such fabrication methods and to optical fibre devices including such optical fibres.

Incorporation of volatile constituents into optical fibres may be crucial for achieving enhanced photosensitive properties, gain and non-linear properties. Photosensitive dopants are needed, for example, for UV writing of Bragg gratings and other refractive index modulated structures. Gain media are needed for fibre lasers and amplifiers. Non-linear properties are needed for non-linear optical fibre devices such as optical switches and frequency converters. Tin and lead are two examples of volatile constituents known to have useful photosensitive and non-linear properties.

However, incorporation of volatile constituents is generally problematic with known fibre drawing techniques such as Modified Chemical Vapour Deposition (MCVD), Vapour Axial Deposition (VAD), and Outside Vapour Deposition (OVD) [1].

MCVD involves deposition of one or more glass layers followed by consolidation of those layers and preform collapse. Since the layer deposition, consolidation and, most importantly, the preform collapse are carried out at elevated temperature, the more volatile constituents tend to out-diffuse and escape from the glass matrix. In addition, the escape of the volatile constituents can cause stripping-out of any rare earth dopants. For example, without special measures, elements such as Sn and Pb cannot be incorporated in silica. Several ways have been proposed to avoid leakage of volatile constituents. For example, to improve MCVD, it has been proposed to increase the partial pressure of the vapour containing the volatile constituents and to add a trapping co-dopant such as Al₂O₃ which increases the solubility of rare earth dopants in the silica matrix [3].

In principle, VAD is better than MCVD in respect of the out-diffusion of volatile constituents, since VAD avoids the high-temperature MCVD preform collapse step. However, in VAD, consolidation takes much longer than in MCVD resulting in comparable levels of out-diffusion of volatile constituents. For OVD, similar comments apply.

It is therefore an aim of the invention to provide an optical fibre fabrication method capable of being used to incorporate relatively volatile constituents, such as Pb or Sn, into the optical fibre.

### SUMMARY OF THE INVENTION

According to one aspect of the invention there is provided a method of fabricating an optical fibre comprising:
(a) providing a preform comprising a cladding glass having an axial aperture and a core glass arranged in the axial aperture, wherein the working temperature of the core glass lies below the working temperature of the cladding glass; and
(b) drawing the preform into an optical fibre at a drawing temperature that lies between the working temperatures of the core and cladding glasses and above the softening temperature of the cladding glass, wherein the core glass prior to drawing includes a dioxide or higher oxide compound of the volatile constituent having a Gibbs free energy of disassociation into a monoxide compound of the volatile constituent that is negative at the drawing temperature, whereby the dioxide or higher oxide compound tends to disassociate into the monoxide compound during drawing.

With this method, the dioxide or higher oxide compound tends to disassociate into the monoxide compound during drawing, but the monoxide compound is retained in contrast to prior art techniques where volatile components are generally not retained.

The Gibbs free energy of disassociation of disassociation from the dioxide or higher oxide compound of the volatile constituent into the monoxide compound is negative at a temperature below a threshold which will usually be in the range of 500 °C or less to 1500 °C.

With this method, the core material melts while the cladding glass remains solid but in a deformable glassy state. Melting the core material has the advantage of relaxing some material constraints. In particular, it provides more freedom in the choice of combinations of core and cladding glasses that can be drawn together into an optical fibre than is possible with conventional MCVD, VAD, or OVD methods. Specifically, the out-diffusion problems of these conventional methods, which are related to use of high temperature during consolidation and collapse of the preform, can be avoided.

Core liquefaction also tends to promote the desired low optical losses in the fabricated fibre, since core liquefaction substantially eliminates stress between the core and cladding glasses during fibre drawing. Core-clad interface stress may, for example, act to promote crystallisation, which would generally increase optical losses.

In a first embodiment, the core glass is arranged in the axial aperture as a powder. The method of this embodiment is a kind of powder-in-tube (PIT) method. PIT methods have been previously proposed for drawing optical fibres [3, 4], although it is believed that no PIT methods have previously been proposed for drawing fibres containing volatile constituents. (The use of powder for making a solid preform is also known [5-8]). In the first embodiment, the core glass and the cladding glass can be chosen to have a thermal expansion coefficient mismatch of 20x10⁻⁷ °C⁻¹ or more, a value of 70x10⁻⁷ °C⁻¹ being the case in one specific example.

In a second embodiment, the core glass is arranged in the axial aperture as a rod. The method of this embodiment is a kind of rod-in-tube (RIT) method [2, 15-17]. The proposed RIT method differs from conventional RIT methods [2] in that core glass is melted during drawing as in references [15-17]. In the second embodiment, the core glass and the cladding glass can be chosen to have a thermal expansion coefficient mismatch of 20x10⁻⁷ °C⁻¹ or more. This is possible by dimensioning the core glass rod and cladding tube so that the rod fits loosely in the cladding tube so that, at the microscopic level, there is no direct interface between the outer surface of the core glass rod and the inner surface of the cladding tube prior to the core glass melting.

In examples of the method of the first and second embodiments, the volatile constituent may be P, Sn or Pb, or a combination thereof.

As mentioned above, the requirement of thermally matching the cladding and core glasses can be relaxed with the proposed method. As a result, the cladding glass can be chosen to be substantially free of the volatile constituent. For example, the concentration of the volatile constituent in the cladding glass may be less than 10%, 1% or 0.1% of the concentration of the volatile constituent in the core glass. The volatile constituent may provide photosensitive, gain or non-linear properties, or a combination thereof.

With the method, the above-mentioned problem of volatile constituents stripping out non-volatile constituents such as rare earth's can be avoided. This allows the core glass to further include a dioxide or higher order oxide compound of a non-volatile constituent having a Gibbs free energy of disassociation into a monoxide that is positive at the drawing temperature, without problems associated with stripping out of the non-volatile constituent by the volatile constituent. The non-volatile constituent may be a lanthanide series element, for example. Specifically, use of Al₂O₃ to increase solubility of the non-volatile lanthanide series element is not necessary [15, 16]. Accordingly, the core glass contains less than 10, 5, 1 or 0.1 mol% Al₂O₃. Again, because of relaxation of the requirement of thermal matching between the cladding and core glasses, the cladding glass may be substantially free of the non-volatile constituent if desired. For example, there may be less than 10%, 1% or 0.1% of the concentration of the non-volatile constituent in the cladding than there is in the core.

According to a second aspect of the invention there is provided an optical fibre incorporating a volatile constituent, comprising a cladding made of a cladding glass and a core made of a core glass, wherein the working temperature of the core glass lies below the working temperature of the cladding glass, and wherein the core glass includes a monoxide compound of the volatile constituent, there being a Gibbs free energy of disassociation from a dioxide or higher oxide compound of the volatile constituent into the monoxide compound that is negative at a temperature below 1500 degrees Celsius.

In specific fibres, the Gibbs free energy of disassociation from the dioxide or higher oxide compound of the volatile constituent into the monoxide compound may be negative at a temperature below 1400, 1300, 1200, 1100 or 1000 °C.

According to a third aspect of the invention there is provided an optical fibre device comprising an optical fibre according to the second aspect. A wide variety of devices may be envisaged. A few examples are Bragg gratings (chirped or unchirped), optical amplifiers, fibre lasers, optical switches and frequency converters.

According to a fourth aspect of the invention there is provided an optical fibre preform for fabricating an optical fibre incorporating a volatile constituent, comprising a cladding glass having an axial aperture and a core glass arranged in the axial aperture, wherein the working temperature of the core glass lies below the working temperature of the cladding glass, and wherein the core glass includes a dioxide or higher oxide compound of the volatile constituent having a Gibbs free energy of disassociation into a monoxide compound thereof that is negative at a temperature below 1500 degrees Celsius.

In specific preforms, the Gibbs free energy of disassociation from the dioxide or higher oxide compound of the volatile constituent into the monoxide compound may be negative at a temperature below 1400, 1300, 1200, 1100 or 1000 °C.

This preform may be suitable for performing either PIT fibre drawing in which case the core glass is arranged in the axial aperture as a powder or RIT fibre drawing in which case the core glass is arranged in the axial aperture as a rod.

The working and softening temperatures of glasses are usually specified in terms of viscosity. Specifically, working temperature is usually defined as the temperature at which the glass has a viscosity of 10⁴ Pascal seconds (i.e. Poise) and softening temperature is usually defined as the temperature at which the glass has a viscosity of 10^{7.6} Pascal seconds. For commercially available glasses, measured values of the working and softening temperatures are often stated in the glass specification. In embodiments of the invention, fibre will typically be drawn at a temperature at which the cladding glass has a viscosity in the range 10⁴ - 10^{7.6} Pascal seconds and the core glass has a viscosity of <10⁴, perhaps <10³, Pascal seconds.

### BRIEF DESCRIPTION OF THE DRAWINGS

For a better understanding of the invention and to show how the same may be carried into effect reference is now made by way of example to the accompanying drawings in which:
Figure 1 is a schematic drawing in section of an optical fibre being drawn from a powder-in-tube (PIT) preform according to a first embodiment of the invention;
Figure 2 is a graph of the Gibbs free energy ΔG of vaporisation via disassociation in kilocalories per mole of various oxide compounds as a function of temperature T in degrees Celsius; and
Figure 3 is a schematic drawing in section of an optical fibre being drawn from a rod-in-tube (RIT) preform according to a second embodiment of the invention.

### DETAILED DESCRIPTION

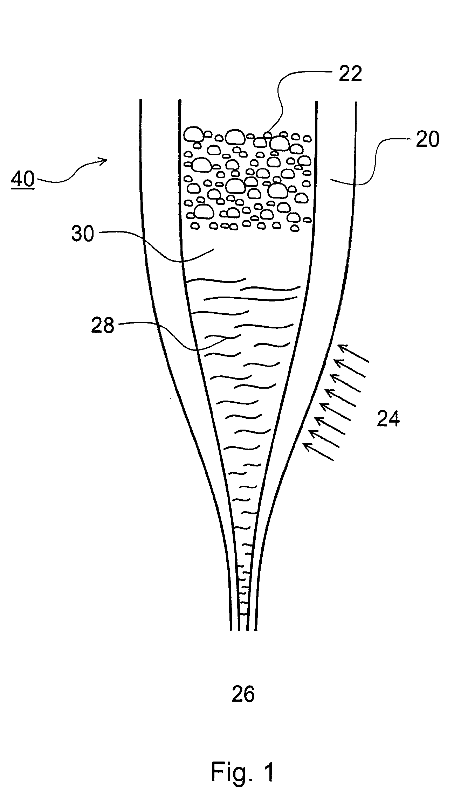

Figure 1 is a schematic drawing in section of an optical fibre being drawn from a powder-in-tube (PIT) preform according to a first embodiment of the invention

To make the preform 40 shown in Figure 1, a glass tube 20 is filled with a glass powder 22. The tube is usually closed (not shown) at at least one end to retain the glass powder. In the preform, the glass of the tube will ultimately form the cladding of the optical fibre, whereas the glass of the powder will ultimately form the core of the optical fibre. The glass of the tube 20 is thus referred to as the cladding glass in the following. Similarly, the glass of the powder 22 is referred to as the core glass.

To fabricate an optical fibre, the preform 40 is placed in a furnace and heated by a heat source (not shown) as schematically indicated by the arrows 24. On heating, the powder 22 forms a liquid 28, an air gap 30 being left between the liquid 28 and the as-yet unmelted powder 22 situated thereabove. A pulling tension 26 is applied to the preform 40 that causes the preform 40 to be drawn into an optical fibre under the heating action, as schematically shown in the figure. The dimensions of the cladding tube 20, specifically its inner diameter (ID) and outer diameter (OD), and the pulling tension 26 are selected taking account of the characteristics of the particular combination of cladding glass and core glass.

A specific example of optical fibre fabrication according to the PIT technique of the first embodiment is now given. The example is of a lead-oxide based optical fibre. The tube 20 has an inside diameter (ID) of approximately 8 mm and an outside diameter (OD) of approximately 24 mm. The tube 20 is made by sleeving three tubes over a fourth, smaller tube. The cladding glass tube 20 is Pyrex (trade mark). The core glass powder 22 is obtained by fragmenting Schott SF59 glass (trade name) into particles of variable dimension, varying between about 1 and 500 microns. During fragmentation, and also subsequent filling of the cladding tube with the fragments, care needs to be taken to avoid contamination. More generally, it is preferred that the dimensions of the powder particles are as large as possible. The upper limit for the dimensions of the powder particles being only dictated by the inner diameter of the cladding tube into which they must fit. Schott SF59 glass has a glass transition temperature T_{g} ∼ 362°C and a thermal expansion coefficient α ∼ 103 x 10⁻⁷ °C⁻¹. The composition of Schott SF59 is 83% w/w PbO and 17% w/w SiO₂. Pyrex is substantially free of lead oxide, has a glass transition temperature T_{g} ∼ 500°C and a thermal expansion coefficient α ∼ 32.5 x 10⁻⁷ °C⁻¹. The composition of Pyrex is 81% w/w SiO₂, 13% B₂O₃, 4% w/w Na₂O and 2% Al₂O₃. The thermal expansion coefficient mismatch between the core and cladding glass Δα ∼ 70 x 10⁻⁷ °C⁻¹. In the finished optical fibre, the expected difference in the refractive index Δn between core and cladding in this example is approximately 0.43.

As required by the present fabrication method, the working temperature of the cladding glass (Pyrex (registered trade mark) working temperature is 1252 °C) is higher than the working temperature of the core glass (Schott SF59 working temperature is no more than its glass temperature of 362 °C) to ensure that, during fibre drawing, the powder melts while the cladding glass is solid, but deformable. A soft glass is deformable, while more cohesive than a liquid. A quantitative definition of a range of temperatures over which a glass is soft (applicable to the cladding glass in the present case) is the range of temperatures between the softening temperature (10^{7.6} Pa•s viscosity point) and the working temperature (10⁴ Pa•s viscosity point). Moreover, a glass is usually considered to be liquid when at a temperature above its working point, i.e. when its viscosity is less than 10⁴ Pa•s [17].

To draw the fibre, the preform 40 is held at a temperature of 1100 °C for 5 minutes to melt the powder 22. The temperature is then elevated to 1175 °C and the fibre is drawn. The drawing temperature (1175 °C) thus lies between the softening and working temperatures (821 and 1252 °C respectively) of the Pyrex cladding glass. Moreover, the Schott SF59 core glass is melted at the drawing temperature, having a glass temperature of only 362 °C. During drawing the outside of the fibre is coated with an acrylate coating (not shown) having a typical thickness of approximately 100 µm.

Optical microscope analysis of the fibre showed that the core is circular. Moreover, no bubbles were observed at the core-cladding interface, attributable to the low viscosity of the melted core glass.

When the preform remnant was removed from the furnace at the end of drawing, all the powder 22 had melted and a solid core was present at the bottom of the remnant of tube 20. Some hours after its removal from the furnace, the preform remnant shattered into many pieces. This is attributable to the large thermal stress frozen into the preform remnant as a result of the core consolidation. The drawn fibre on the other hand was stable and remained intact, which is attributed to the smaller size of the drawn fibre (typical OD ∼ 125µm), which is orders of magnitude smaller than the preform (OD ∼ 24mm). The present example thus demonstrates that optical fibre can be successfully fabricated from core and cladding glasses that are severely thermally mismatched (Δα ∼ 70 x 10⁻⁷ °C⁻¹ in the example).

This feature of the method has the advantage that it allows the core glass and the cladding glass to be chosen principally in relation to their optical or other properties in the finished fibre. By contrast, with prior art fabrication methods, the choice of core and cladding glasses is often dictated by the fabrication method itself through the requirement for a good thermal match between these glasses (see reference [14] for example).

In the example of an optical fibre being prepared for UV writing of a refractive index modulation structure in the core, it is generally beneficial not to include the (UV opaque) photosensitive dopant in the cladding. However, if the photosensitive dopant affects the thermal expansivity of its host glass, then using prior art methods, the worker may be forced to include the photosensitive dopant in the cladding glass simply to provide an adequate thermal match with the core glass. This design constraint is relaxed by the present embodiment.

Attempts to produce a similar optical fibre using conventional MCVD and RIT techniques were unsuccessful.

In addition to the specific example of incorporation of lead oxide, the optical fibre fabrication method of the first embodiment is applicable to incorporation of a variety of volatile constituents, as now quantified.

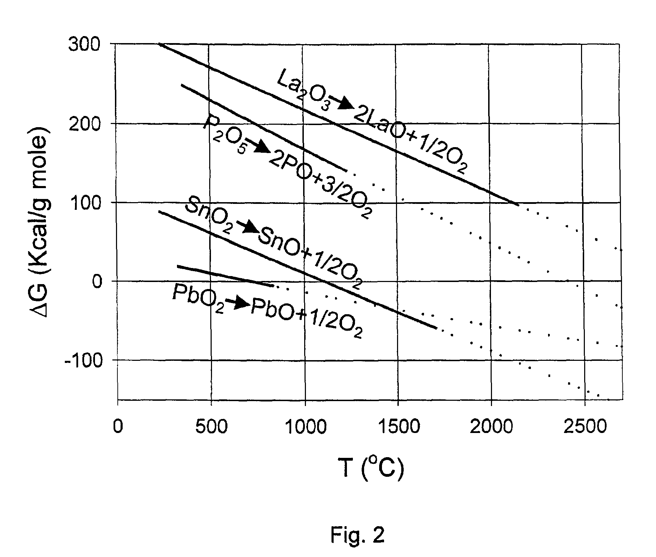

Figure 2 is a graph plotting the Gibbs free energy ΔG of vaporisation via disassociation (in kilocalories per mole) as a function of temperature T in degrees Celsius for four different oxide compounds. The reactions are from the solid dioxide, trioxide and pentoxide compounds PbO₂, SnO₂, P₂O₅ and La₂O₃ into their respective monoxide gas phases (i.e. PbO, SnO, PO and LaO) plus gaseous oxygen (O₂). The data are taken from references [11], [11a], [12] and [13]. The solid lines reflect measured data and the dashed lines are extrapolations from the measured data.

A disassociation reaction is energetically favourable when the Gibbs free energy for that reaction is negative. Accordingly, as can be seen from the graph, PbO₂ is the most volatile of the compounds shown, its Gibbs free energy becoming negative at around 700 °C. For SnO₂ the Gibbs free energy becomes negative at around 1100 °C. (PbO₂ and SnO₂ have respective boiling points of ∼1470 °C and 1800-1900 °C).

P₂O₅ is considerably less volatile, having a Gibbs free energy of disassociation into the monoxide that becomes negative at around 2400 °C. This temperature is only slightly higher than typical drawing temperatures for silica fibre which are 2000 - 2300 °C, so that some reduction of the P₂O₅ into PO may take place during drawing.

Here it is relevant to note that the data of Figure 2 is based on the assumption that the chemical reaction takes place at equilibrium. In other words, the assumption is that the concentration of products (in the present case mono-oxides and oxygen) is balanced with that of the reagents (in the present case more complex oxides). Thus, even when the disassociation Gibbs energy is slightly positive, disassociation may still take place when the concentration of products is lower than reagents. This means that P₂O₅ may disassociate even at temperatures slightly lower than the zero disassociation Gibbs energy point plotted in the figure.

Further, the data is also based on consideration of the oxides alone, as indicated by the reactions drawn in Figure 2. The data may vary if the glass, e.g. silica, is taken into account.

Because of these factors, the data shown should be regarded as indicative of, rather than definitive of, quantitative values which can be determined by experiment for individual compounds if required.

Returning to the figure, the Gibbs free energy of disassociation of the rare earth compound La₂O₃ is still positive at 2500 °C so that it will be non-volatile at any drawing temperatures used for fabricating silica or related optical fibres. The properties of other rare earth compounds are believed to be similar, in that there will be no significant disassociation at any drawing temperatures used for silica-based optical fibre. In other words, the rare earth oxide compounds can be defined as non-volatile for the purposes of drawing silica-based fibres. The boiling points of rare earth's are quoted to be between 3600 °C and 4200 °C [11-13]. It is also noted that Al₂O₃ has a boiling point of about 3000 °C and is classified as non-volatile for the present purposes.

For the present purposes a volatile compound is thus defined as a dioxide or higher oxide compound that can disassociate into its monoxide at the fibre drawing temperature, preform collapse temperature or other relevant temperature. In other words, a volatile compound is a compound for which the relevant Gibbs free energy of disassociation into the monoxide form of the compound is negative at the drawing temperature of the fibre. Correspondingly, a non-volatile compound is defined for the present purposes as one for which the relevant Gibbs free energy of disassociation is positive at the fibre drawing temperature, preform collapse temperature or other temperature. Typically for silica-based optical fibre the drawing temperature will be in the range 2000 - 2300 °C. It will be appreciated that the present method may be used for drawing optical fibres that are not silica based, in which case other ranges of drawing temperatures may apply.

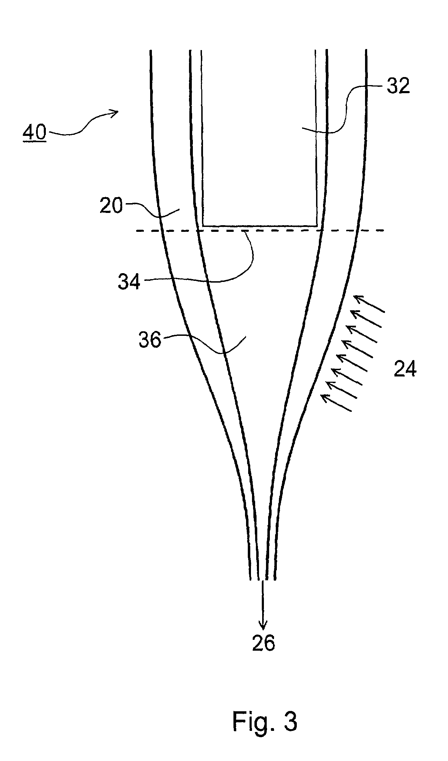

Figure 3 is a schematic drawing in section of an optical fibre being drawn from a rod-in-tube (RIT) preform according to a second embodiment of the invention. The preform 40 comprises a glass tube 20 arranged around a solid rod 32. In analogy to the terminology used for describing the first embodiment, the glass of the tube 20 is referred to as cladding glass and the glass of the rod 32 as core glass.

The drawing technique is generally as described in relation to the first embodiment in that heating 24 from a heat source (not shown) is applied to melt the core glass as the fibre is drawn under a tension 26 in a furnace. A dashed line 34 is used in the figure to illustrate schematically the boundary between solid core glass rod 32 and the molten core glass 36.

The method of the second embodiment is thus similar to the first embodiment in that the core glass is melted during drawing while the cladding glass remains solid in a glassy, and thus extrudable, state. This state is sometimes referred to as soft in the art, and the comments made above on the definition of softening temperature in relation to the first embodiment also apply to the second embodiment. The method of the second embodiment is thus similar to references [15-17] but different from conventional prior art RIT methods [2] in that the core glass is melted during drawing. The RIT method of the second embodiment thus shares the advantage of the PIT method of the first embodiment in that stress between the core and cladding glass is relieved during drawing by the melting of the core glass. After drawing, the core glass solidifies in the drawn fibre and stresses are induced. However, as in the first embodiment, the reduced dimensions of the drawn fibre are able to accommodate stresses that would be too large to be accommodated in the larger preform.

A particular feature of the RIT method of the second embodiment is that, since the method involves melting the core rod, there is no requirement that the core rod is a tight fit in the cladding tube, as in conventional prior art RIT methods. Consequently, the core rod diameter can be chosen to be significantly lower than the inner diameter of the cladding tube so that no thermal stresses will occur between core and cladding glasses prior to melting, since there is no intimate interface between them.

A specific example of the second embodiment is now given and relates to RIT fabrication of a fibre with a Sn:Na:Si core and silica cladding.

The cladding tube of OD=34 mm and ID=1.6 mm was provided. The cladding glass was the glass Suprasil (trade mark) which is synthetic silica. Suprasil has a softening temperature of 1600 °C and a working temperature of about 2400 °C. A core glass rod of dimensions 1.5 mm diameter and 50 mm long was produced initially by melting powders of Na₂O, SiO₂ and SnO₂ in a Pt crucible at 1500 °C for 60 minutes. The core glass rod was then consolidated at 1750 °C for 60 minutes into the desired rod. The molar composition of the powder used to produce the core glass was: [SiO₂]=75%, [SnO₂]=5%, [Na₂O]=20%. A core glass having this composition has a working temperature of about 1700 °C.

The RIT method of this example proceeded by collapsing the Suprasil cladding glass tube onto the core glass rod at 2000 °C while drawing the fibre. The drawing temperature (2000 °C) thus lies between the Suprasil cladding glass softening and working temperatures (1600 - 2400 °C) and above the working temperature of the Na₂O:SiO₂:SnO₂ core glass (1700 °C). The drawn fibre had OD=74 µm.

Comparing the PIT method of the first embodiment with the RIT method of the second embodiment, it is considered that the PIT method of the first embodiment has some advantages over the RIT method of the second embodiment. For example, the use of powder for the core allows the preform to have a smaller diameter than is possible with the RIT method, since for RIT the core needs to be large enough not to break when being handled, typically at least about 1 mm in diameter for convenient handling. Specifically, with the PIT method of the first embodiment, the internal diameter of the cladding tube can be made much smaller than the corresponding outer diameter of the core glass rod in the RIT method of the second embodiment. This has the advantage that, the smaller the starting preform, the less sensitive the fabrication method is to stresses caused by thermal mismatch between the core and cladding glasses.

### REFERENCES

1. S Nagel et al, "An overview of the MCVD process and performance", IEEE Journal of Quantum Electronics QE18, pages 459-475 (1982)
2. E Snitzer and R Tumminelli, "SiO2-clad fibres with selectively volatilised soft-glass cores", Optics Letters vol. 14, pages 757-759 (1989)
3. J Ballato and E Snitzer, "Fabrication of fibres with high rare-earth concentrations for Faraday isolator applications", Applied Optics vol. 34, pages 6848-6854 (1995)
4. GB 1 340 849
5. US 4,620,862
6. US 4,810,275
7. US 5,318,432
8. US 6,007,786
9. J E Townsend et al., "Solution doping technique for fabrication of rare earth doped optical fibres", Electronics Letters vol. 23, pages 329-330 (1989)
10. B J Ainslie, J R Armitage, SP Craig and B Wakefield, "Fabrication and optimisation of the Erbium distribution in silica based doped fibres", European Conference on Optical Communication (ECOC), Brighton, 1988, pages 62-65
11. Handbook on the Physics and Chemistry of Rare Earths, vol. 3, edited by K A Gschneidner and L R Evring, North-Holland, 1979
11a. R J Ackermann and E G Rauh: Journal of Chemical Thermodynamics, vol. 3, pages 445-460 (1971)
12. CRC Handbook of Chemistry and Physics, 76th edition, edited by D R Lide and HPR Frederikse, CRC Press Inc., 1995-1996
13. Alfa Aesar catalogue, Research Chemicals, Metals and Materials, 1999-2000
14. M A Newhouse, D L Weidman, and DW Hall, "Enhanced-nonlinearity single-mode lead silicate optical fibre", Optics Letters vol. 15, pages 1185-1187 (1990)
15. WO 00/10932 A1
16. WO 00/27773 Al
17. EP 0 842 907 A1

## Claims

1. A method of fabricating an optical fibre incorporating a volatile constituent, comprising:
(a) providing a preform comprising a cladding glass having an axial aperture and a core glass arranged in the axial aperture, wherein the working temperature of the core glass lies below the working temperature of the cladding glass; and
(b) drawing the preform into an optical fibre at a drawing temperature that lies between the working temperatures of the core and cladding glasses and above the softening temperature of the cladding glass, wherein the core glass prior to drawing includes a dioxide or higher oxide compound of the volatile constituent having a Gibbs free energy of disassociation into a monoxide compound of the volatile constituent that is negative at the drawing temperature, whereby the dioxide or higher oxide compound tends to disassociate into the monoxide compound during drawing.

2. A method according to claim 1, wherein the core glass is arranged in the axial aperture as a rod.

3. A method according to claim 2, wherein the rod of core glass is arranged with a loose fit in the axial aperture of the cladding glass.

4. A method according to claim 1, wherein the core glass is arranged in the axial aperture as a powder.

5. A method according to any one of the preceding claims, wherein the volatile constituent is P, Sn or Pb.

6. A method according to any one of the preceding claims, wherein the cladding glass is substantially free of the volatile constituent.

7. A method according to any one of the preceding claims, wherein the volatile constituent provides photosensitive, gain and/or non-linear properties.

8. A method according to any one of the preceding claims, wherein the core glass further includes a dioxide or higher order oxide compound of a non-volatile constituent having a Gibbs free energy of disassociation into a monoxide that is positive at the drawing temperature.

9. A method according to claim 8, wherein the non-volatile constituent is a lanthanide series element.

10. A method according to claim 8 or 9, wherein the cladding glass is substantially free of the non-volatile constituent.

11. A method according to any one of the preceding claims, wherein the core glass contains less than 10, 5, 1 or 0.1 mol% Al₂O₃.

12. An optical fibre incorporating a volatile constituent, comprising a cladding made of a cladding glass and a core made of a core glass, wherein the working temperature of the core glass lies below the working temperature of the cladding glass, and wherein the core glass includes a monoxide compound of the volatile constituent, there being a Gibbs free energy of disassociation from a dioxide or higher oxide compound of the volatile constituent into the monoxide compound that is negative at a temperature below 1500 degrees Celsius.

13. An optical fibre according to claim 12, wherein the Gibbs free energy of disassociation from the dioxide or higher oxide compound of the volatile constituent into the monoxide compound is negative at a temperature below 1400, 1300, 1200, 1100 or 1000 degrees Celsius.

14. An optical fibre according to any one of claims 12 or 13, wherein the volatile constituent provides photosensitive, gain and/or non-linear properties.

15. An optical fibre according to any one of claims 12 to 14, wherein the volatile constituent is P, Sn or Pb.

16. An optical fibre according to any one of claims 12 to 15, wherein the core glass further includes a dioxide or higher order oxide compound of a non-volatile constituent having a Gibbs free energy of disassociation into a monoxide that is positive at a temperature below one of 2000, 1500 and 1000 degrees Celsius.

17. An optical fibre according to claim 16, wherein the non-volatile constituent is a lanthanide series element.

18. An optical fibre according to any one of claims 12 to 17, wherein the core glass and the cladding glass have a thermal expansion coefficient mismatch of at least 20x10⁻⁷ °C⁻¹.

19. An optical fibre according to any one of claims 12 to 18, wherein the core glass contains less than 10, 5, 1 or 0.1 mol% Al₂O₃.

20. An optical device comprising an optical fibre according to any one of claims 12 to 19.

21. An optical fibre preform for fabricating an optical fibre incorporating a volatile constituent, comprising a cladding glass having an axial aperture and a core glass arranged in the axial aperture, wherein the working temperature of the core glass lies below the working temperature of the cladding glass, and wherein the core glass includes a dioxide or higher oxide compound of the volatile constituent having a Gibbs free energy of disassociation into a monoxide compound thereof that is negative at a temperature below 1500 degrees Celsius.

22. An optical fibre preform according to claim 21, wherein the Gibbs free energy of disassociation from the dioxide or higher oxide compound of the volatile constituent into the monoxide compound is negative at a temperature below 1400, 1300, 1200, 1100 or 1000 degrees Celsius.

23. An optical fibre preform according to claim 21 or 22, wherein the core glass is arranged in the axial aperture as a rod.

24. An optical fibre preform according to claim 23, wherein the rod of core glass is arranged with a loose fit in the axial aperture of the cladding glass.

25. An optical fibre preform according to claim 21 or 22, wherein the core glass is arranged in the axial aperture as a powder.

26. An optical fibre preform according to any one of claims 21 to 25, wherein the volatile constituent is P, Sn or Pb.

27. An optical fibre preform according to any one of claims 21 to 26, wherein the core glass further includes a non-volatile constituent having a Gibbs free energy of disassociation that is positive at the drawing temperature.

28. An optical fibre preform according to claim 27, wherein the non-volatile constituent is a lanthanide series element.

29. An optical fibre preform according to any one of claims 21 to 28, wherein the core glass contains less than 10, 5, 1 or 0.1 mol% Al₂O₃.
